# EUROPEAN PATENT APPLICATION

(11) **EP 4 557 799 A1**
(43) Date of publication of application: **21.05.2025**
(21) Application number: 22951066.4
(22) Date of filing: 12.07.2022
(51) Int. Cl.: H04W 24/00

(54) **TERMINAL, RADIO COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); LIU, Liu, Beijing 100190 (CN); CHEN, Lan, Beijing 100190 (CN); WANG, Xin, Beijing 100190 (CN)
(74) Representative: Hoffmann Eitle
(86) International application number: PCT/JP2022/027422
(87) International publication number: WO 2024/013852

(57) **Abstract**

A terminal according to one aspect of the present disclosure includes: a receiving section that receives a request for a data set for a specific artificial intelligence (AI) model; a control section that collects the data set in a specific scenario configuration; and a transmitting section that transmits information regarding the data set, the information indicating an identifier (ID) of the specific scenario configuration. According to one aspect of the present disclosure, preferable overhead reduction/channel estimation/resource use can be achieved.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is studied to utilize the artificial intelligence (AI) technology, such as machine learning (ML), for control, management, and the like of networks/devices.

In the AI/ML field, generalization capability (GC) means capability of an AI model well adapted to (possible to provide desired output or possible to make a suitable prediction for) unknown data (test data) as well as training data given at the time of training. Performance of GC is also referred to as GC performance (or generalization performance).

Also in NR standards, how to evaluate GC performance has been discussed. It is desired to efficiently ensure GC of an AI model without spending too much time and effort on monitoring/updating the AI model. However, study about concrete techniques for this has not advanced. Unless such a method is appropriately defined, appropriate overhead reduction/highly accurate channel estimation/highly efficient resource use based on an AI model cannot be achieved, which may suppress improvement of communication throughput/communication quality.

Thus, an object of the present disclosure is to provide a terminal, a radio communication method, and a base station that can achieve preferable overhead reduction/channel estimation/resource use.

### Solution to Problem

A terminal according to one aspect of the present disclosure includes: a receiving section that receives a request for a data set for a specific artificial intelligence (AI) model; a control section that collects the data set in a specific scenario configuration; and a transmitting section that transmits information regarding the data set, the information indicating an identifier (ID) of the specific scenario configuration. Advantageous Effects of Invention

According to one aspect of the present disclosure, preferable overhead reduction/channel estimation/resource use can be achieved.

### Brief Description of Drawings

[FIG. 1] FIG. 1 is a diagram to show an example of a framework of management of an AI model.
[FIG. 2] FIG. 2 is a diagram to show an example of collection/reporting of a data set for ensuring GC of an AI model according to one embodiment.
[FIG. 3] FIG. 3 is a diagram to show an example of correspondences between use cases and scenario configuration formats in a first embodiment.
[FIG. 4] FIG. 4 is a diagram to show an example of correspondences between AI models and scenario configuration formats in a second embodiment.
[FIG. 5] FIG. 5 is a diagram to show an example of reception of information regarding scenario configurations according to embodiment 3.1.
[FIG. 6] FIG. 6 is a diagram to show an example of collection of a data set according to embodiment 3.2.
[FIG. 7] FIG. 7 is a diagram to show an example of transmission of a data set according to embodiment 3.3.
[FIG. 8] FIG. 8 is a diagram to show an example of training on the UE side according to a fourth embodiment.
[FIG. 9] FIG. 9 is a diagram to show an example of model selection according to embodiment 5.1.
[FIG. 10] FIGS. 10A and 10B are diagrams to show examples of GC performance evaluation in embodiment 5.2.
[FIG. 11] FIG. 11 is a diagram to show an example of the GC performance evaluation in embodiment 5.2.
[FIG. 12] FIG. 12 is a diagram to show an example of a schematic structure of a radio communication system according to one embodiment.
[FIG. 13] FIG. 13 is a diagram to show an example of a structure of a base station according to one embodiment.
[FIG. 14] FIG. 14 is a diagram to show an example of a structure of a user terminal according to one embodiment.
[FIG. 15] FIG. 15 is a diagram to show an example of a hardware structure of the base station and the user terminal according to one embodiment.
[FIG. 16] FIG. 16 is a diagram to show an example of a vehicle according to one embodiment.

### Description of Embodiments

### (Application of Artificial Intelligence (AI) Technology to Radio Communication)

For future radio communication technologies, it is studied to utilize the AI technology, such as machine learning (ML), for control, management, and the like of networks/devices.

For example, it is studied that a terminal (user terminal, User Equipment (UE))/base station (BS) utilizes the AI technology for improvement of channel state information (CSI) feedback (for example, overhead reduction, accuracy improvement, prediction), improvement of beam management (for example, accuracy improvement, prediction in the time/spatial domain), improvement of location measurement (for example, improvement of location estimation/prediction), and the like.

The AI model may output at least one piece of information among an estimated value, a predicted value, a selected operation, classification, and the like, based on input information. A UE/BS may input channel state information, a reference signal measurement value, and the like to the AI model and output highly accurate channel state information/measured value/beam selection/location, future channel state information/radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, estimation, prediction, and inference may be interchangeably interpreted. In the present disclosure, "estimate," "predict," and "infer" may be interchangeably interpreted.

In the present disclosure, an object may be, for example, an apparatus, a device, or the like, such as a UE or a BS. In the present disclosure, the object may correspond to a program/model/entity that operates in the apparatus.

Note that, in the present disclosure, the AI model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, an AI model may mean a data driven algorithm to which the AI technology is applied to generate a set of outputs, based on an input set.

In the present disclosure, an AI model, a model, an ML model, predictive analytics, a predictive analytics model, a tool, an autoencoder, an encoder, a decoder, a neural network model, an AI algorithm, a scheme, and the like may be interchangeably interpreted. The AI model may be derived by using at least one of regression analysis (for example, linear regression analysis, multiple regression analysis, logistic regression analysis), support vector machine, random forest, neural network, deep learning, and the like.

In the present disclosure, an autoencoder and any autoencoder such as a stacked autoencoder or a convolutional autoencoder may be interchangeably interpreted. An encoder/decoder in the present disclosure may adopt a model such as Residual Network (ResNet), DenseNet, RefineNet, or the like.

In the present disclosure, an encoder, encoding, encode/encoded, modification/change/control by an encoder, compression (compressing), compress/compressed, generating, generate/generated, and the like may be interchangeably interpreted.

In the present disclosure, a decoder, decoding, decode/decoded, modification/change/control by a decoder, decompressing, decompress/decompressed, reconstructing, reconstruct/reconstructed, and the like may be interchangeably interpreted.

In the present disclosure, a layer (for an AI model) and a layer (input layer, intermediate layer, or the like) used in an AI model may be interchangeably interpreted. A layer in the present disclosure may correspond to at least one of an input layer, an intermediate layer, an output layer, a batch normalization layer, a convolutional layer, an activation layer, a dense layer, a normalization layer, a pooling layer, an attention layer, a dropout layer, a fully connected layer, and the like.

In the present disclosure, examples of a method of training an AI model may include supervised learning, unsupervised learning, reinforcement learning, and federated learning. The supervised learning may mean processing of training a model by using an input and a corresponding label. The unsupervised learning may mean processing of training a model without labeled data. The reinforcement learning may mean processing of training a model by using an input (in other words, a state) and a feedback signal (in other words, a reward) generated from an output (in other words, action) of a model in an environment of the model interacting.

In the present disclosure, "generate," "compute," and "derive" may be interchangeably interpreted. In the present disclosure, "perform," "manage," "operate," "carry out," and the like may be interchangeably interpreted. In the present disclosure, training, learning, update, retraining, and the like may be interchangeably interpreted. In the present disclosure, inference, after-training, substantial use, actual use, and the like may be interchangeably interpreted. In the present disclosure, a signal and a signal/channel may be interchangeably interpreted.

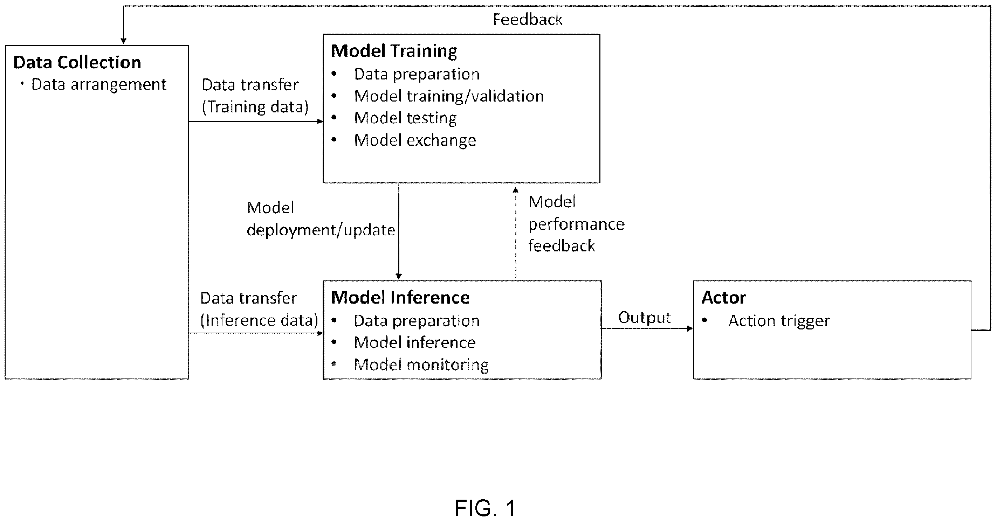

FIG. 1 is a diagram to show an example of a framework of management of an AI model. In this example, each stage related to the AI model is illustrated as a block. This example is also expressed as life-cycle management of the AI model.

A data collection stage corresponds to a stage of collecting data for generation/update of the AI model. The data collection stage may include data arrangement (for example, determination of which data to transfer for model training/model inference), data transfer (for example, transfer of data to an entity (for example, a UE or a gNB) that performs model training/model inference), and the like.

Note that data collection may mean processing of collecting data by a network node, a management entity, or a UE for the purpose of AI model training/data analysis/inference. In the present disclosure, processing and a procedure may be interchangeably interpreted. In the present disclosure, collection may mean acquiring of a data set for training/inference of an AI model (for example, usable as an input/output), based on measurement (channel measurement, beam measurement, radio link quality measurement, location estimation, or the like).

In the present disclosure, offline field data may be data collected from a field (real world) to be used for offline training of an AI model. In the present disclosure, online field data may be data collected from a field (real world) to be used for online training of an AI model.

In a model training stage, model training is performed based on data (data for training) transferred from the collection stage. This stage may include data preparation (for example, performance of preprocessing, cleaning, formatting, conversion, and the like of data), model training/validation, model testing (for example, checking whether a trained model satisfies a threshold of performance), model exchange (for example, transfer of a model for distributed learning), model deployment/update (deploying/updating a model for an entity to perform model inference), and the like.

Note that AI model training may mean processing for training an AI model in a data driven method and acquiring a trained AI model for inference.

An AI model validation may mean sub-processing of training for evaluating quality of the AI model by using a data set different from a data set used for model training. The sub-processing is useful for selection of a model parameter for generalization beyond the data set used for the model training.

An AI model testing may mean sub-processing of training for evaluating final performance of the AI model by using a data set different from a data set used for model training/validation. Note that testing, unlike validation, need not assume model tuning after the operation.

In a model inference stage, model inference is performed based on data (data for inference) transferred from the collection stage. This stage may include data preparation (for example, performance of preprocessing, cleaning, formatting, conversion, and the like of data), model inference, model monitoring (for example, monitoring of performance of model inference), model performance feedback (feedback of model performance to an entity performing model training), output (provision of an output of a model to an actor), and the like.

Note that AI model inference may mean processing for generating an output set from an input set by using the trained AI model.

A UE side model may mean an AI model for which inference is completely performed in a UE. A network side model may mean an AI model for which inference is completely performed in a network (for example, gNB).

A one-sided model may mean a UE side model or a network side model. A two-sided model may mean a pair of AI models for which joint inference is performed. Here, the joint inference may include AI inference in which the inference is jointly performed over a UE and a network, and, for example, a first part of the inference may be performed by the UE first while the remaining part may be performed by the gNB (or the other way round).

AI model monitoring may mean processing for monitoring inference performance of an AI model, and may be interpreted as model performance monitoring, performance monitoring, and the like, and vice versa.

Note that model registration may mean that a version identifier is assigned to a model to enable execution of the model by means of compilation with specific hardware to be used in an inference stage. Model deployment may mean delivering a run time image of a model completely developed and tested (or an image of execution environment) to a target (for example, a UE/gNB) in which inference is to be performed (or enabling the image in the target).

An actor stage may include action trigger (for example, determination of whether to trigger an action for another entity), feedback (for example, feedback of information necessary for data for training/data for inference/performance feedback), and the like.

Note that training of a model for mobility optimization may, for example, be performed in operation, administration and maintenance (Management) (OAM)/gNodeB(gNB) in a network (NW). In the former case, interoperation, a large-capacity storage, manageability of an operator, and flexibility of a model (future engineering and the like) are advantageous. In the latter case, no need of latency of model update, data exchange for model deployment, and the like is advantageous. The inference of a model may be performed in the gNB, for example.

An entity to perform training/inference may be different according to use case (in other words, a function of an AI model). Examples of the function of an AI model may include beam management, beam prediction, autoencoder (or information compression), CSI feedback, positioning, and the like.

For example, for AI assisted beam management based on a measurement report, OAM/gNB may perform model training, and the gNB may perform model inference.

For AI assisted UE assisted positioning, Location Management Function (LMF) may perform model training, and the LMF may perform model inference.

For CSI feedback/channel estimation using an autoencoder, the OAM/gNB/UE may perform model training, and the gNB/UE may (jointly) perform model inference.

For AI assisted beam management based on beam measurement or AI assisted UE based positioning, the OAM/gNB/UE may perform model training, and the UE may perform model inference.

Note that model activation may mean enabling an AI model for a specific function. Model deactivation may mean disabling an AI model for a specific function. Model switching may mean deactivating a currently active AI model for a specific function and activating a different AI model.

Model transfer may mean delivering an AI model on an air interface. This delivery may include delivering one or both of a parameter having a model structure known to the receiving side and a new model having a parameter. This delivery may include a complete model or a partial model. Model download may mean model transfer from a network to a UE. Model upload may mean model transfer from a UE to a network.

### (Generalization Capability (GC))

In the AI/ML field, GC means capability of an AI model well adapted to (possible to provide desired output or possible to make a suitable prediction for) unknown data (test data) as well as training data given at the time of training. Performance of GC is also called GC performance (or generalization performance).

How to evaluate GC performance is also discussed in NR standards. For example, the following respects are discussed from the viewpoint of a training data set and a test/inference set (data set for test/inference) (note that A, B, C, and the like are names of data sets/configurations/scenarios, and when a plurality of names are listed, this means a data set corresponding to the plurality of corresponding data sets/configurations/scenarios; this similarly applies the following discussions):
- A training data set is formed by mixing training inputs from a plurality of configurations/scenarios, and test/inference is carried out for a single configuration/scenario (for example, the training data set corresponds to A and B while the inference data set corresponds to B, or the training data set corresponds to C, D, and E while the inference data set corresponds to B).
- A training data set is formed by mixing training inputs from a single configuration/scenario, and test/inference is carried out for another single configuration/scenario (for example, the training data set corresponds to A while the inference data set corresponds to B).
- A training data set is formed by mixing training inputs from a single configuration/scenario, and test/inference is carried out for the same configuration/scenario (for example, the training data set corresponds to A, and the inference data set corresponds to A).

Note that a scenario may be one of a scenario, a frequency range, a numerology, an inter-BS distance, an outdoor/indoor UE distribution, and a UE speed. A configuration may be one or a plurality of an antenna port number, an antenna configuration, a bandwidth, and CSI feedback payload.

The following respects are discussed from the viewpoint of how to consider a combination/priority order of various scenarios and configurations for forming a training data set and a test/inference set:
- scenario based: fix a scenario and validate GC performance of an AI model This AI model is trained by a data set having one specific scenario and one or a plurality of configurations and applied to a test/inference set having the same scenario and the same/different configuration(s) (for example, the training data set has scenario A and configurations a and b, and the inference data set has scenario A and configuration c).
- scenario generalization: validate GC performance of an AI model This AI model is trained by a data set having one or a plurality of scenarios and one or a plurality of configurations and applied to a test/inference set having the same/different scenario(s) and the same/different configuration(s) (for example, the training data set has scenario A and configurations a and b while the inference data set has scenario B and configuration c, or the training data set has scenario A and configurations a and b while the inference data set has scenario B and configurations a and b).

The following respects are discussed from the viewpoint of AI model update/selection:
- A single AI model is learned based on scenario/configuration #A, and the resultant is applied to inference/test for same scenario/configuration #A or different scenario/configuration #B.
- An AI model is learned based on scenario/configuration #A, an additional data set from scenario/configuration #B is further used for fine tuning, and the resultant is applied to inference/test for scenario/configuration #B.
- A plurality of respective AI models are learned based on scenario/configuration #A, scenario/configuration #B, ..., and the respective resultants are applied to inference/test for scenario/configuration #A, scenario/configuration #B, ....

From the above, an AI model has problems regarding GC as follows:
- A model is obtained by offline learning using a simulation-oriented data set, and hence the data set may contradict field data of the real world.
- A model is learned offline/online in a given scenario/configuration and used for inference in another scenario/configuration. When the model is changed/updated frequently, signal overhead results in being excessive.
- A model learned offline/online in mixed scenarios/configurations may be too old to be true when radio communication environment changes.

Hence, it is desired to efficiently ensure GC of an AI model without spending too much time and effort on monitoring/updating the AI model. However, study about concrete techniques for this has not advanced. Unless such a method is appropriately defined, appropriate overhead reduction/highly accurate channel estimation/highly efficient resource use based on an AI model cannot be achieved, which may suppress improvement of communication throughput/communication quality.

Thus, the inventors of the present invention came up with the idea of a method of forming a data set, a GC evaluation/validation method, a model management method considering GC performance (which may be referred to as GC level), and the like for ensuring GC of an AI model. Note that each of the embodiments of the present disclosure may be used irrespective of evaluation of GC and the like (simply for acquisition of a data set and the like).

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, higher layer signaling may be, for example, any one or combinations of Radio Resource Control (RRC) signaling, Medium Access Control (MAC) signaling, broadcast information, and the like.

In the present disclosure, MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, the channel measurement/estimation may be performed by using at least one of a channel state information reference signal (CSI-RS), a synchronization signal (SS), a synchronization signal/broadcast channel (Synchronization Signal/Physical Broadcast Channel (SS/PBCH)) block, a demodulation reference signal (DMRS), a reference signal for measurement (Sounding Reference Signal (SRS)), and the like, for example.

In the present disclosure, the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), information regarding a channel matrix (or a channel coefficient), information regarding a precoding matrix (or a precoding coefficient), and the like.

In the present disclosure, a CSI-RS, a non-zero power (Non Zero Power (NZP)) CSI-RS, a zero power (ZP) CSI-RS, and CSI interference measurement (CSI-IM) may be interchangeably interpreted. A CSI-RS may include another reference signal(s).

In the following embodiments, description will be given of an AI model related to UE-BS communication, and hence related subjects are a UE and a BS. However, application of each of the embodiments of the present disclosure is not limited to this. For example, for communication between other entities (for example, UE-UE communication), a UE and a BS in the following embodiments may be interpreted as a first UE and a second UE. In other words, a UE, a BS, and the like in the present disclosure may be interpreted as any UE/BS.

Note that, in the present disclosure, a data set and data may be interchangeably interpreted. In the present disclosure, a channel state, a channel status, a channel, channel environment, and the like may be interchangeably interpreted.

### (Radio Communication Method)

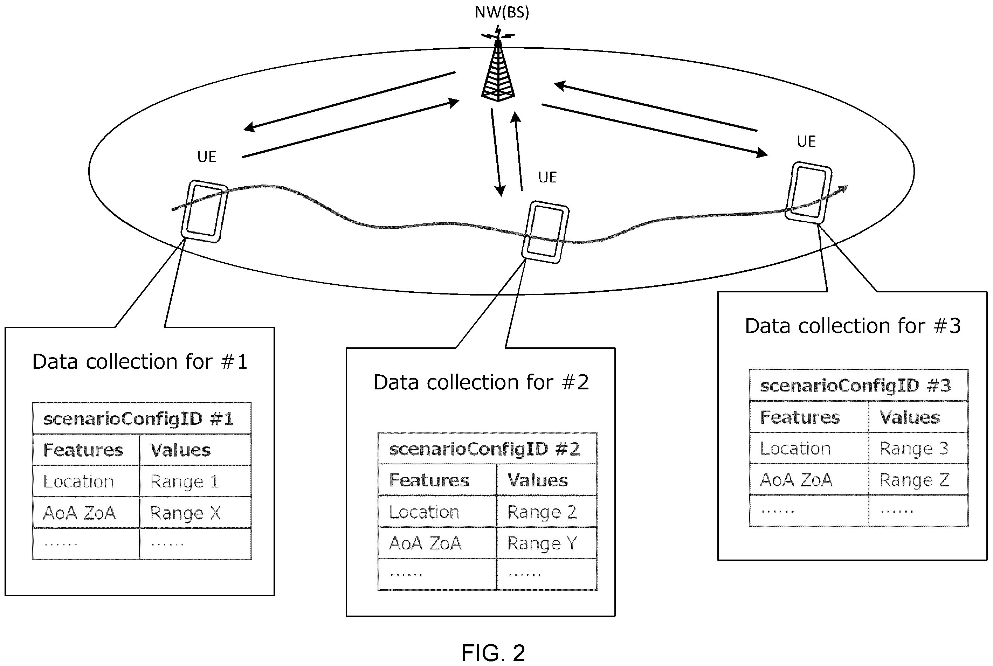

FIG. 2 is a diagram to show an example of collection/reporting of a data set for ensuring GC of an AI model according to one embodiment. Note that similar environments are illustrated in the subsequent diagrams, and parts for which overlapping description is omitted may be assumed to be similar to those in FIG. 2.

According to the following embodiments, as shown in FIG. 2, a UE in a cell formed by a given BS can collect/report data for scenario configuration IDs #1, #2, and #3 while moving (at different sites).

When data corresponding to scenario configuration ID #1 are successfully collected, the UE/BS can perform model training, based on the data corresponding to scenario configuration ID #1.

When data corresponding to scenario configuration IDs #1 and #2 are successfully collected, the UE/BS can perform model training, based on the data corresponding to scenario configuration ID #1, data corresponding to scenario configuration ID #2, or both of these.

When data corresponding to scenario configuration IDs #1, #2, and #3 are successfully collected, the UE/BS can perform model training, based on the data corresponding to scenario configuration ID #1, data corresponding to scenario configuration ID #2, data corresponding to scenario configuration ID #3, or a combination of these (#1 and #2, #2 and #3, #1 and #3, or #1, #2, and #3).

Scenario configurations will be described mainly in a first/second embodiment. Training on the NW side/UE side will be described mainly in a third/fourth embodiment.

### <First Embodiment>

The first embodiment relates to a scenario configuration format.

In the first embodiment, a use case using an AI model is associated with a scenario configuration format including long-term features (long-tern features).

Note that the long-term features may be interpreted as short-term/middle-term/long-term features, simply features, and the like, and vice versa. The scenario configuration format may be interpreted as a scenario and configuration format, a scenario structure format, a scenario format, a configuration format, a use case format, an environment format, a meta format, and the like, and vice versa. The format may be interpreted as a type, a mode, data, a configuration, and the like, and vice versa.

The features may include one or a plurality of combinations of the following elements:
- scenario/model (Urban Macro (UMa), Urban Micro (Umi), indoor, outdoor, indoor hotspot, or the like)
- frequency/frequency range
- numerology (or subcarrier spacing)
- distribution/set of general channel parameters (for example, inter-site distances (ISD), gNB height, delay spread, angular spread, Doppler spread, or the like) in a single scenario/model
- UE distribution
- UE speed
- UE course
- the number of transmit beams/receive beams
- UE rotation pattern
- gNB/UE antenna configuration (for example, transmission/reception antenna vector)
- the number of cells/number of sectors
- bandwidth
- UE payload
- channel quality (for example, RSRP, SINR)
- beam configuration ID
- physical cell ID (PCI)
- global cell ID (GCI)
- absolute radio frequency channel number (ARFCN)
- probability of Line Of Site (LOS)/Non-Line Of Site (NLOS)

In the first embodiment, it may be expected that a UE is configured/registered with a model having a related scenario configuration format matching the configuration/status of the UE.

In the first embodiment, it may be expected that the UE activates a model having a related scenario configuration format matching the configuration/status of the UE.

Each correspondence between a use case and a scenario configuration format may be defined in a standard, or the UE may be notified of information regarding the correspondence. Features included in a scenario configuration format corresponding to a use case may be defined in a standard, or the UE may be notified of information regarding the features.

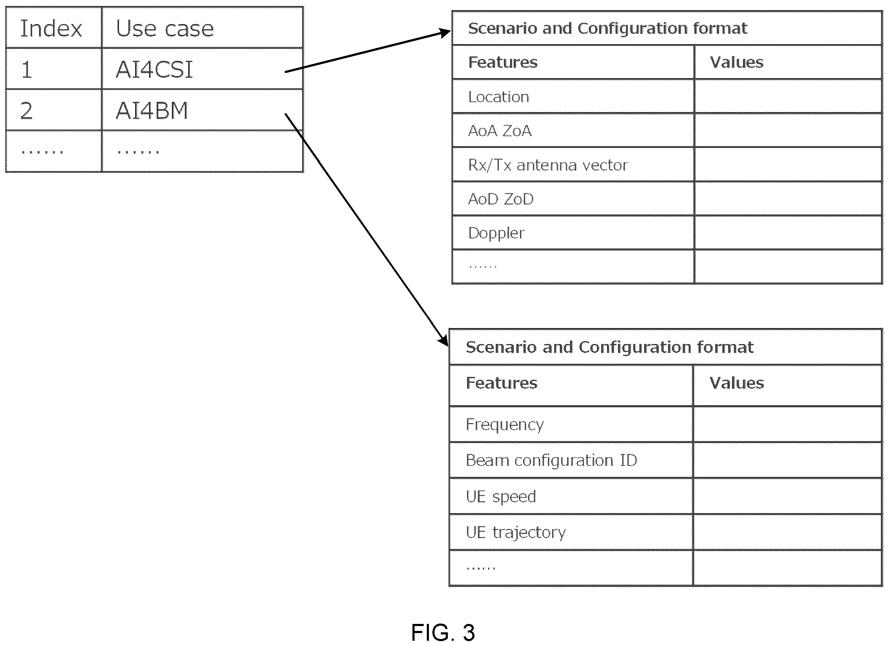

FIG. 3 is a diagram to show an example of correspondences between use cases and scenario configuration formats in the first embodiment. In this example, "AI4CSI" (AI model for CSI feedback) and "AI4BM" (AI model for beam management (BM)) are illustrated as use cases. Each use case may be assigned a corresponding index, and a UE/BS may determine an AI model to use, based on a notified index. Note that the names of the use cases are examples and are not limited to these.

In this example, AI4CSI is associated with a scenario configuration format including features such as location and AoA/ZoA. AI4BM is associated with a scenario configuration format including features such as frequency, beam configuration ID, and the like.

According to the first embodiment described above, a UE can preferably determine a scenario configuration corresponding to a data set for training/inference, based on a scenario configuration format.

### <Second Embodiment>

The second embodiment relates to a list of scenario configuration formats.

The second embodiment is the same as the first embodiment in that a use case using an AI model is associated with a scenario configuration format but is different from the first embodiment in that a list of one or more scenario configuration formats is associated with each AI model for the use case.

Note that one or more AI models may be associated with a use case. One or more AI models associated with one use case may correspond to the same model structure or may correspond to different model structures.

The scenario configuration format(s) included in the list may each be identified by a scenario configuration ID, for example, or an included feature may be associated with at least one of the range of a value used for generation of a data set for training of an AI model (or corresponding to the data set), the range of a value of a data set usable (or collected) for inference (or corresponding to the data set), and the like.

Each correspondence between an AI model and a list of a scenario configuration format(s) may be defined in a standard, or the UE may be notified of information regarding the correspondence.

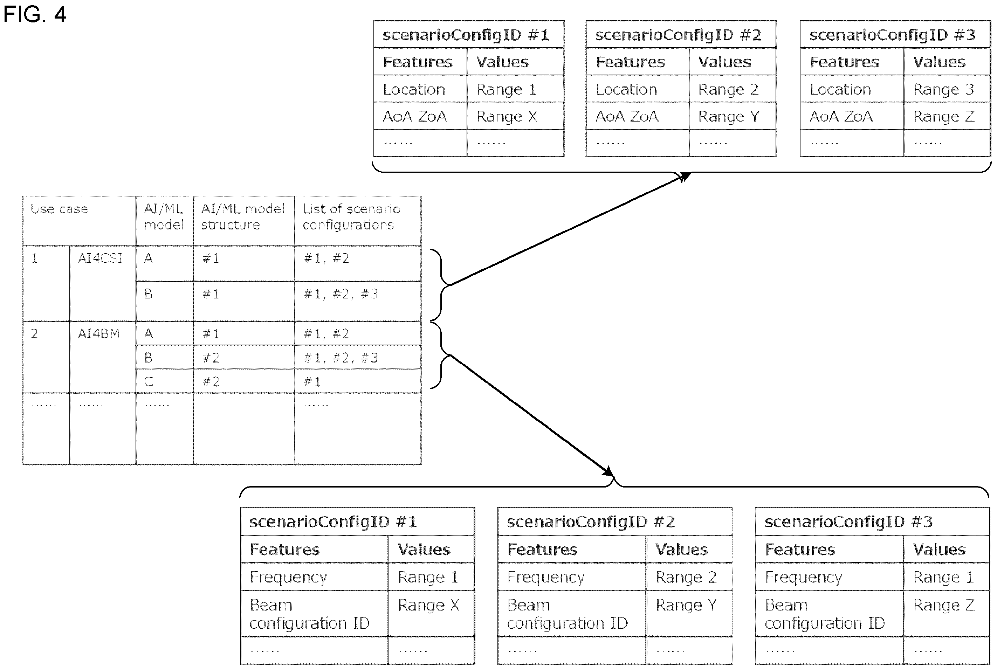

FIG. 4 is a diagram to show an example of correspondences between AI models and scenario configuration formats in the second embodiment. In this example, AI models A and B are associated with use case ID #1, and AI models A to C are associated with use case ID #2.

AI models A and B associated with use case ID #1 correspond to the same model configuration. AI model A associated with use case ID #2 and AI models B and C correspond to different model configurations.

Overlapping scenario configuration IDs may be permitted for use cases (the same scenario configuration ID may indicate a different scenario configuration for each use case). Alternatively, scenario configuration IDs may be configured not to overlap over use cases. In this example, scenario configurations to be referred to (to be associated with scenario configuration IDs) are different for each use case.

In the present disclosure, a scenario configuration may define a value of a feature or a range of the value. For example, in FIG. 4, scenario configuration ID #1 for use case ID #1 indicates a scenario configuration corresponding to location being range 1 (for example, the latitude/longitude being within range 1) and AoA/ZoA being range X (for example, AoA/ZoA being within the range of range X).

Note that, in the following in the present disclosure, a scenario configuration ID, one or more scenario configuration IDs, and a list of scenario configuration IDs may be interchangeably interpreted.

In the present disclosure, a use case ID/model ID/scenario configuration ID and another information (for example, another ID) associated with the use case ID/model ID/scenario configuration ID may be interchangeably interpreted. Each correspondence between the other information and the use case ID/model ID/scenario configuration ID may be defined in a standard, or the UE may be notified of information regarding the correspondence.

According to the second embodiment described above, a UE can preferably determine a scenario configuration corresponding to a data set for training/inference, based on a list of a scenario configuration format(s).

### <Third Embodiment>

The third embodiment relates to training on the NW side. The third embodiment may be related to training of an AI model for which training processing is completely performed only on the NW side.

### {Embodiment 3.1: Reception of Information Regarding Scenario Configuration}

A UE may receive, from an NW, information regarding a scenario configuration for which collection of a data set is needed, for a specific AI model in a specific use case.

The information regarding a scenario configuration may include at least one of a corresponding scenario configuration ID, a corresponding model ID, a corresponding use case ID, and the like.

The information regarding a scenario configuration may include information regarding the format of a data set to be collected (ought to be collected). The information regarding a scenario configuration may be information regarding a scenario configuration independent of the format of a data set to be collected (ought to be collected).

The format of the data set may correspond to input/output data of the AI model. The UE may estimate/acquire the format of the data set from AI model information (to be described later in <Supplements> of the present disclosure; this similarly applies to subsequent model information) or dedicated signaling (for example, the information regarding a format).

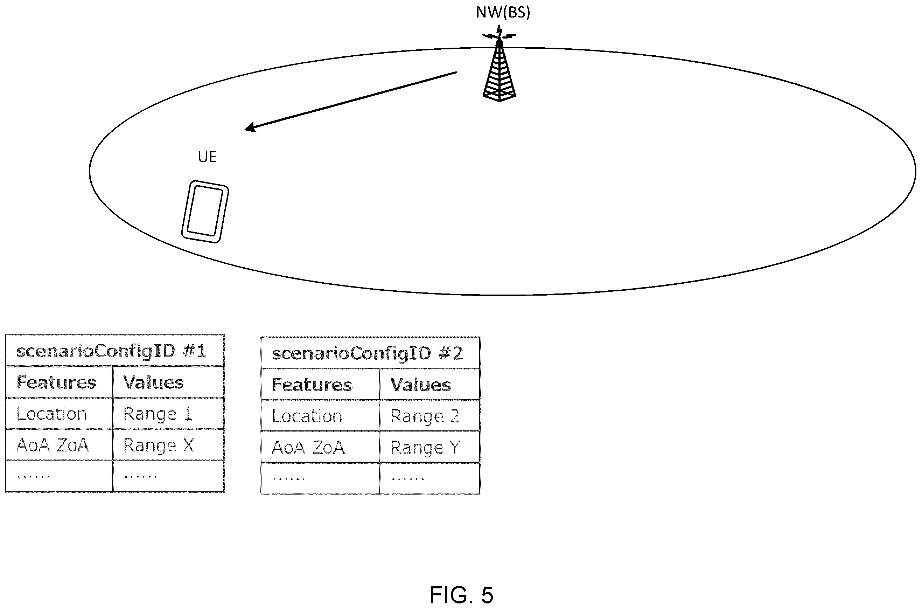

FIG. 5 is a diagram to show an example of reception of information regarding scenario configurations according to embodiment 3.1. For respects similar to those in the previous drawings, overlapping description will not be repeated (this similarly applies in the following).

In this example, a UE receives, from an NW, information regarding a scenario configuration for a list of scenario configuration IDs (indicating scenario configuration IDs #1 and #2) corresponding to AI model A of use case ID #1. The information regarding a scenario configuration may include information indicating that the format of the data set is a channel/precoding matrix, as information regarding the format of the data set.

### {Embodiment 3.2: Collection of Data Set}

A UE may collect a data set for training for a specific AI model, based on a specific scenario configuration.

The UE may receive a data collection request (data collection request signal) of the specific scenario configuration. For example, the data collection request may include a scenario configuration ID indicating the specific scenario configuration. When the scenario configuration indicated by the data collection request is included in a scenario configuration indicated by the information regarding a scenario configuration received in embodiment 3.1, the UE may collect a data set in the scenario configuration.

The UE may determine the specific scenario configuration, based on measurement/sensing of channel environment. When the UE compares the measured channel environment and a scenario configuration indicated by the information regarding a scenario configuration received in embodiment 3.1 and finds out that the channel environment and the scenario configuration match (the measured channel environment is included in the environment of the scenario configuration), the UE may collect the data set in the scenario configuration thus matching.

Note that the UE may be notified only of the model ID/use case ID corresponding to a data set ought to be collected, and the UE may determine the specific scenario configuration from among the scenario configurations associated with the model ID/use case ID, based on the measurement/sensing of the channel environment.

The UE may assign a corresponding scenario configuration ID to the collected data set. The UE may transmit, to an NW, information indicating that the data set for the specific scenario configuration is available (has successfully been collected).

Control based on a data collection request and control based on measurement/sensing of channel environment may be used in combination.

Note that, in the present disclosure, a data set may be collected from a data server, based on a scenario configuration ID or may be collected based on channel measurement corresponding to the format of the data set.

Note that, in the present disclosure, a data server may be interpreted as a repository, an uploader, a library, a cloud server, simply a server, and the like, and vice versa. A data server in the present disclosure may be provided by any platform such as GitHub (registered trademark) and may be managed by any corporation/organization.

The UE may collect a data set for specific AI model training, based only on NW indication (for example, request/trigger/termination). In this case, a scenario configuration may be transparent to the UE. The UE only needs to collect a data set, based on the NW indication even without knowing the current environment, and hence reduction of UE load can be expected.

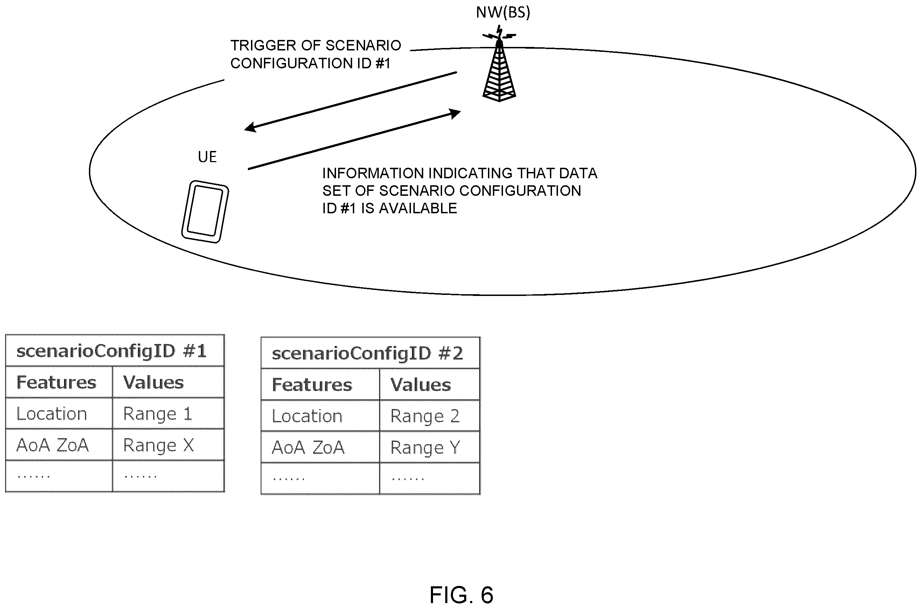

FIG. 6 is a diagram to show an example of collection of a data set according to embodiment 3.2.

The UE may receive, from the NW, trigger information for scenario configuration ID #1, and collect a data set for scenario configuration ID #1, based on the information. Note that, in the present disclosure, collecting a data set for a given scenario configuration ID may mean associating (or labeling) a collected data set with being for the given scenario configuration ID.

Even when the UE does not receive the trigger information, the UE may collect, in response to recognition that measured channel environment/sensing result corresponds to scenario configuration ID #1 (for example, location corresponds to range 1 and AoA/ZoA corresponds to range X), a data set for scenario configuration ID #1.

When the UE has collected a data set for scenario configuration ID #1, the UE may transmit information indicating that the data set for scenario configuration ID #1 is available.

### {Embodiment 3.3: Transmission of Data Set}

The UE may transmit, to the NW, the information regarding a collected data set for training for a specific AI model (which may be referred to as a data set report).

The information regarding a data set may include at least one of the data set itself, a corresponding scenario configuration ID/model ID/use case ID, and the like.

After the UE has received a data set request (data set request signal) (or in response to the time of reception of the request), the UE may transmit the information regarding a data set. The data set request may include information indicating a scenario configuration ID/model ID/use case ID for which a request for a data set is desired. When the UE receives a data set request, the UE may transmit information regarding all the data sets collected after transmission (of information regarding a data set) for the previous data set request, or may transmit information regarding a data set associated with a specific scenario configuration ID/model ID/use case ID (for example, when the data set request includes information indicating the specific scenario configuration ID/model ID/use case ID).

When the UE transmits information regarding a data set in response to reception of a data set request indicating a scenario configuration ID/model ID/use case ID, the UE need not include the scenario configuration ID/model ID/use case ID in the information regarding a data set (since the NW can find the ID corresponding to the data set).

Note that communication for (reporting of) the information regarding a data set (for example, UE-BS communication, BS-core network communication, intra-core network communication, or the like) may be performed based on the level of new service quality (Quality of Service (QoS)) for data set transmission. For example, a value of a new 5G QoS Identifier (5QI)/QoS Class Identifier (QCI) for AI model data set transmission may be defined.

For communication for (reporting of) information regarding a data set request, an apparatus included in the UE/BS/core network may perform control based on the new 5QI/QCI value. For example, the apparatus included in the UE/BS/core network may perform QoS control corresponding to the new 5QI/QCI value, for communication of a packet indicating the new 5QI/QCI value or a bearer (or a network slice) corresponding to the new 5QI/QCI value.

The UE may transmit (upload) the information regarding a data set to a data server. The transmission may include transmission from the UE to the NW and transfer from the NW to the data server.

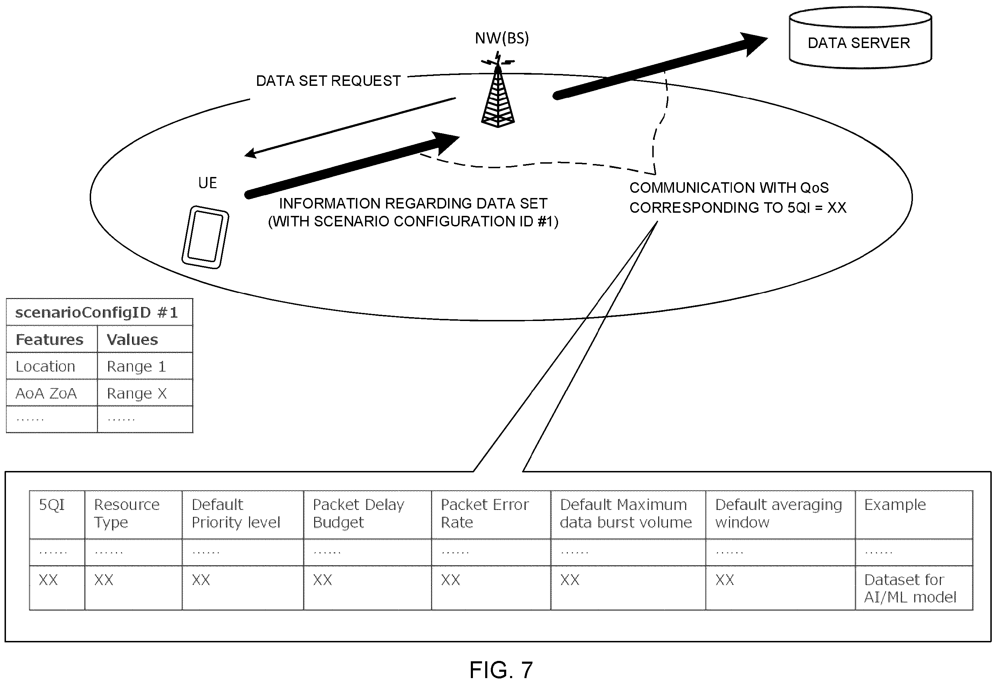

FIG. 7 is a diagram to show an example of transmission of a data set according to embodiment 3.3.

When the UE receives a data set request from the NW, the UE may transmit information regarding a data set to the NW. This information may include information indicating scenario configuration ID #1. This information may be transferred from the NW to a specific data server. The information regarding a data set may be performed by communication of QoS corresponding to 5QI = XX.

According to the third embodiment described above, training of an AI model on the NW side can be appropriately performed.

### <Fourth Embodiment>

The fourth embodiment relates to training on the UE side. The fourth embodiment may be related to training of an AI model for which training processing is completely performed only on the UE side.

In the fourth embodiment, a UE may receive information regarding a scenario configuration as in embodiment 3.1 and may collect a data set as in embodiment 3.2.

The UE may train an AI model, based on a group of collected data sets associated with a scenario configuration ID. In the present disclosure, "train an AI model, based on a group of collected data sets associated with a scenario configuration ID" and "train an AI model for a scenario configuration ID" may be interchangeably interpreted.

The UE may receive model training information (which may also be referred to as training indication, a training request, and the like) from an NW and train an AI model by using a data set corresponding to the information. The model training information may include information of (a list of) a use case ID(s)/model ID(s)/scenario configuration ID(s) associated with the data set to be used for the training. For example, when the NW determines that a model in a given scenario configuration is useful/shows poor performance, the NW may transmit model training information including the scenario configuration to the UE to cause the UE to train an AI model associated with the scenario configuration.

The UE may train an AI model according to a measurement result of a channel state. For example, when the measurement result of the channel state matches a specific scenario configuration (for example, the measured channel state is included in the environment of the scenario configuration), the UE may train an AI model associated with the specific scenario configuration.

The UE may train an AI model for each of all the combinations of scenario configurations for which a data set(s) can be used. For example, as described in the third embodiment, when the UE receives a model ID and a scenario configuration ID, the UE may train an AI model for each of all possible combinations corresponding to the model ID/scenario configuration ID.

When the UE monitors GC performance (to be described later in a fifth embodiment) and finds that the GC performance is poor in a specific scenario configuration, the UE may train an AI model for the specific scenario configuration.

After the training of the AI model, the UE may transmit, to the NW, information regarding availability of the AI model (which may be referred to as model availability information) with a use case ID/model ID/scenario configuration ID being included therein. The use case ID and the model ID included in the information may indicate a use case and an AI model to be applied, respectively. The scenario configuration ID included in the information may indicate a scenario configuration used for the training. The model availability information may correspond to information indicating that the model is available, for example.

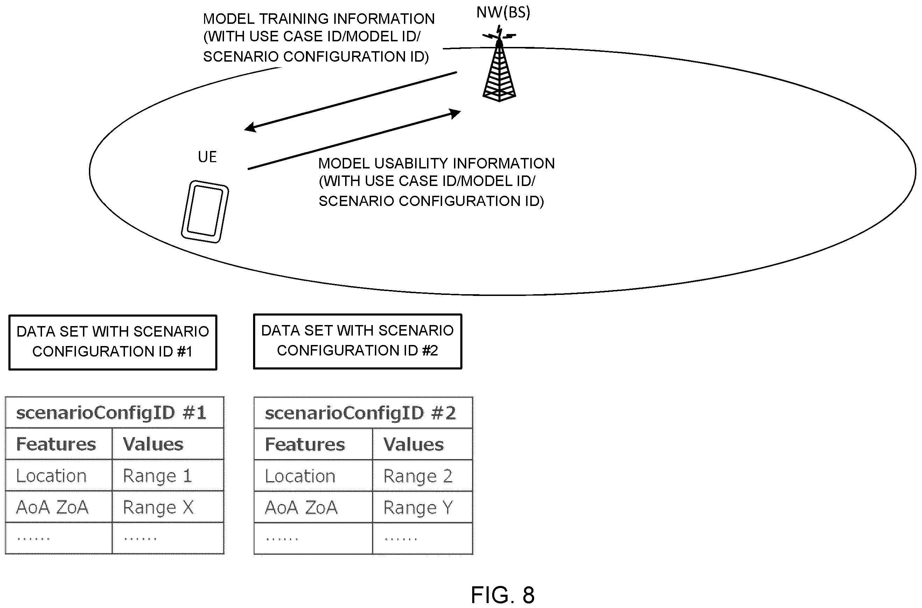

FIG. 8 is a diagram to show an example of training on the UE side according to the fourth embodiment. In this example, a UE assumes that data sets have already been collected for scenario configuration ID #1 and scenario configuration ID #2.

When the UE receives model training information including a use case ID/model ID/scenario configuration ID from an NW, the UE may train a model corresponding to the model ID for the scenario configuration corresponding to the scenario configuration ID.

For example, when the UE receives model training information indicating model ID #1 and scenario configuration ID #1, the UE may train the model corresponding to model ID #1 by using a data set corresponding to scenario configuration ID #1. When the UE receives model training information indicating model ID #1 and scenario configuration ID #2, the UE may train the model corresponding to model ID #1 by using the data set corresponding to scenario configuration ID #2. When the UE receives model training information indicating model ID #1 and scenario configuration IDs #1 and #2, the UE may train the model corresponding to model ID #1 by using the data set corresponding to scenario configuration ID #1 and the data set corresponding to scenario configuration ID #2.

According to the fourth embodiment described above, training of an AI model on the UE side can be appropriately performed.

### <Fifth Embodiment>

The fifth embodiment relates to a UE side model. The fifth embodiment may be related to an AI model for which inference is completely performed only on the UE side.

### {Embodiment 5.1: Reception of Information of List of Scenario Configuration IDs}

A UE may receive information of a list of scenario configuration IDs in a model deployment procedure for an AI model. The information of a list may be included in model information of the AI model or may be information independent of the model information of the AI model. In the latter case, the UE may refer to a scenario configuration ID(s) associated with an AI model ID. Each correspondence between a scenario configuration ID and a model ID may be defined in a standard, or the UE may be notified of information regarding the correspondence.

The UE may determine (select) to use/activate/deploy the model of a corresponding AI model ID under the environment of the scenario configuration corresponding to a given scenario configuration ID, based on the received AI model information/information of a list of scenario configuration IDs, for example.

When the UE has received information of a plurality of AI models including (or associated with) the same scenario configuration ID, the UE may select a model to use/activate/deploy from the AI models, based on at least one of the following:
- scenario configuration associated with each of the AI models and measured channel state
- state of the UE (for example, the speed of the UE)
- configuration/activation by an NW

Note that, even when the UE has received information of a plurality of AI models including (or associated with) different scenario configuration IDs, the UE may perform the above model selection.

When the UE has selected (determined) a model to apply to a given scenario configuration, the UE may report model information regarding the determined model (and a corresponding scenario configuration ID) to the NW.

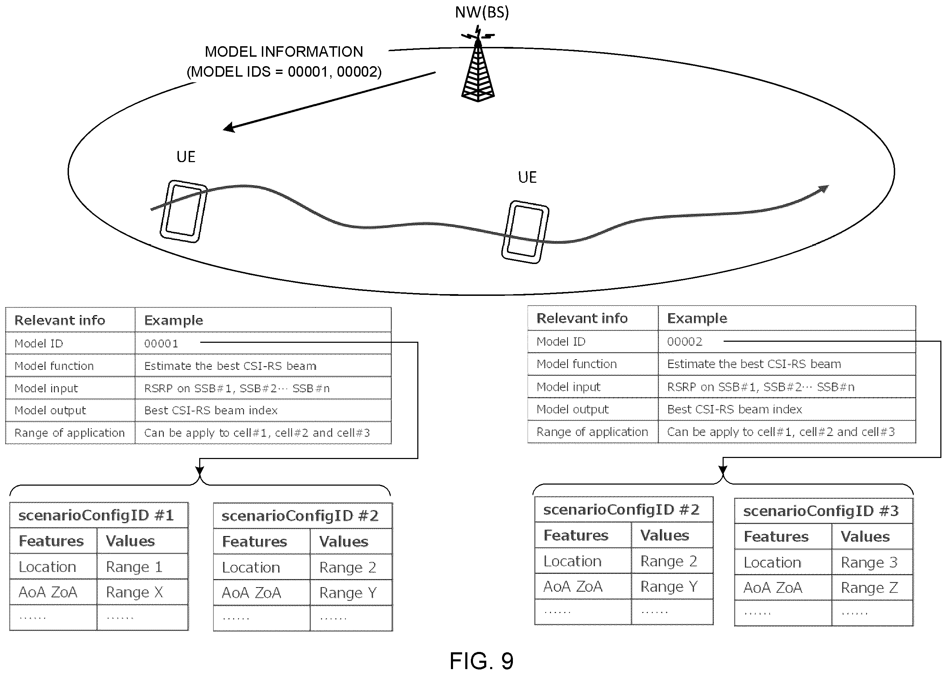

FIG. 9 is a diagram to show an example of model selection according to embodiment 5.1. In this example, a UE has received AI model information indicating model IDs = 00001 and 00002. AI models corresponding to these IDs are each defined to have the function of estimating the best CSI-RS beam and the like as illustrated. Note that this is merely an example, and details of a model is not limited to this.

In this example, model ID = 00001 is associated with scenario configuration IDs #1 and #2 while model ID = 00002 is associated with scenario configuration IDs #2 and #3, and hence both include scenario configuration ID #2.

The UE may determine which model to use, based on a measured channel state, for example. The UE may determine, at the first location in the movement path of the UE illustrated in FIG. 9, to use the model corresponding to model ID = 00001 corresponding to scenario configuration IDs (#1 and #2) closer to the current state while determining, at the location in the middle, to use the model corresponding to model ID = 00002 corresponding to scenario configuration IDs (#2 and #3) closer to the current state.

According to embodiment 5.1 described above, a UE can appropriately select a model.

### {Embodiment 5.2: Monitoring of GC Performance}

A UE may monitor the state of GC performance during model inference. A key performance indicator (KPI) of the GC performance may be at least one of the following (in other words, the GC performance may be expressed/evaluated by at least one of the following KPIs):
- KPI of final/experimental performance for a specific use case that can be acquired after model inference (for example, throughput)
- KPI of AI model performance that can be acquired after model training/after test (for example, generalization error/bias (bias error)/dispersion (dispersion error), layer rotation, AI model performance for each scenario)

The generalization error/bias/dispersion may be a value obtained by comparing outputs of an AI model in different scenario configurations, for example. The layer rotation may be variations (or change) in cosine of the angle between a weight vector and a specific vector (for example, a weight vector after training, a weight vector before training), or the like) for each layer of a neural network.

The UE may check (evaluate), for one or more GC performances, whether at least one of the following conditions is satisfied:
- option 1 (absolute scheme): GC performance of an active/registered/configured model in a given scenario configuration is lower/higher than a threshold
- option 2 (relative scheme): GC performance of an active/registered/configured model in a given scenario configuration is lower/higher than GC performance in another scenario configuration
- option 3: GC performance of a given model falls below a threshold a given number of times or more over a given period

Note that, in the present disclosure, the GC performance and performance obtained by adding offset X (X is a real number, for example) to GC performance may be interchangeably interpreted. The offset X may be determined based on a different factor (for example, performance not monitored/with no need of being monitored) from pure performance (reproductivity performance). By introducing the offset, model evaluation comprehensively considering the different factor is possible.

Here, the performance not monitored/with no need of being monitored may correspond to at least one of overhead, reliability (of the model/calculated value), complexity of the model, power consumption for computation, and the like.

A value such as X or each threshold (or information regarding the value) may be defined in a standard in advance or may be determined based on UE capability, the UE may be notified of the value by the NW, or the value may be included in a scenario configuration (determined based on the scenario configuration) or may be included in AI model information (determined based on the model). The information regarding a value such as X or each threshold may be defined/notified for each model/group of models/scenario configuration/group of scenario configurations.

Which one (or combination) of options 1 to 3 is to be checked by the UE may be defined/notified for each model/group of models/scenario configuration/group of scenario configurations.

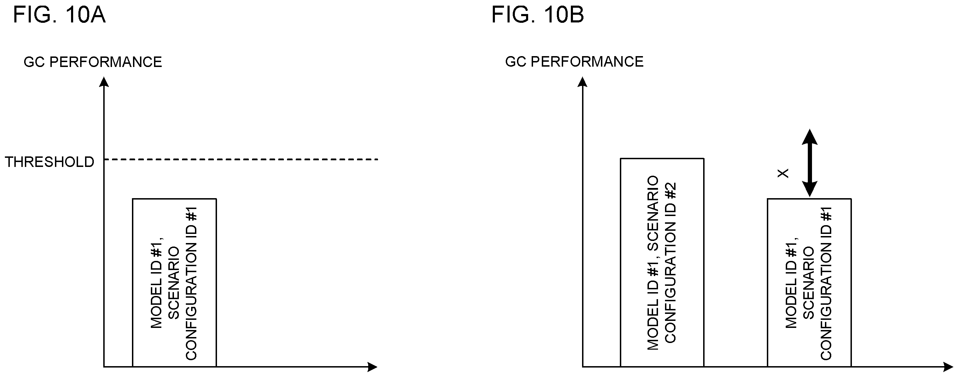

FIGS. 10A and 10B are diagrams to show examples of GC performance evaluation in embodiment 5.2.

FIG. 10A shows an example of option 1 above. In this example, a UE evaluates that GC performance corresponding to model ID #1 and scenario configuration ID #1 is lower than a threshold.

FIG. 10B shows an example of option 2 above. In this example, a UE assumes that offset X (here, X > 0) is applied to GC performance corresponding to model ID #1 and scenario configuration ID #1. The UE also evaluates that GC performance corresponding to model ID #1 and scenario configuration ID #2 is lower than GC performance corresponding to model ID #1 and scenario configuration ID #1 and applied with offset X.

Option 3 above will be described concretely. Option 3 may include, for example, the following steps for a given model/given scenario configuration:
- When GC performance being smaller than a first value is counted a first number of times or more by a first counter, a timer is started.
- When GC performance being larger than a second value is counted a second number of times or more by a second counter while the timer is running, the timer is stopped.
- When GC performance is smaller than the first value while the timer is running, the second counter is reset.
- When GC performance is larger than the first value, the first counter is reset.
- When the timer expires, GC performance is evaluated as "low."

Note that the first value may be a first threshold (thresholdₒᵤₜ) or may be a value smaller than a reference value (baseline value) for a specific model/scenario configuration by a first offset (offsetₒᵤₜ).

The second value may be a second threshold (thresholdᵢₙ) or may be a value larger than the reference value (baseline value) for the specific model/scenario configuration by a second offset (offsetᵢₙ).

Note that resetting the counter may mean setting the counter to a specific value (for example, 0).

Here, a value such as the first/second threshold, the baseline value, the first/second offset, the first/second counter, the granularity of the counter, or the time length of each timer (or information regarding the value) may be defined in a standard in advance or may be determined based on UE capability, the UE may be notified of the value by the NW, or the value may be included in AI model information (determined based on the model). The information regarding such a value may be defined/notified for each model/scenario configuration.

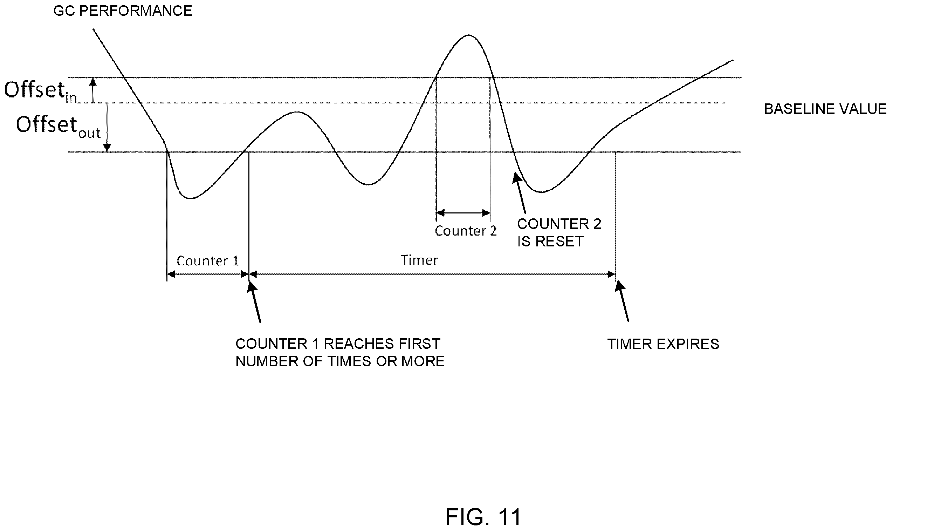

FIG. 11 is a diagram to show an example of GC performance evaluation in embodiment 5.2. In this example, GC performance is good at the beginning, but when GC performance being smaller than the first value is counted the first number of times or more by the first counter, the timer is started. After this, GC performance being larger than the second value is counted several times by the second counter while the timer is running, but the timer expires without the second counter showing the second number of times or more, and hence the GC performance of this model/scenario configuration is evaluated as being low.

In embodiment 5.2, a UE may evaluate one or more GC performances and select (determine) the top K (K is an integer) performance(s).

The value K (or information regarding the value) may be defined in a standard in advance or may be determined based on UE capability, the UE may be notified of the value by the NW, or the value may be information associated with the model (determined based on the model).

Note that, in the present disclosure, a UE may derive GC performance, based on one or more GC performances and one or more performances not monitored/with no need of being monitored. In the present disclosure, GC performance may be averaged/weighted over a given period at the time of evaluation/comparison. Information regarding the period, an averaging/weighting technique, or the like may be defined in a standard in advance or may be determined based on UE capability, the UE may be notified of the information by the NW, or the information may be information associated with the model (determined based on the model).

Note that, when GC performance of a given model is not sufficient, the UE may perform switching to another model. The UE may determine a model to be applied to (or a model to be used for) a given scenario configuration, based on GC performance evaluated in the condition(s) (at least one of options 1 to 3) described in embodiment 5.2, for example.

According to embodiment 5.2 described above, a UE can appropriately perform GC performance evaluation.

According to the fifth embodiment described above, inference/evaluation based on an AI model on the UE side can be appropriately performed.

### <Sixth Embodiment>

A sixth embodiment relates to a UE side model. The sixth embodiment may be related to an AI model for which inference is completely performed only on the UE side.

First, a performance report will be described. The performance report in the sixth embodiment may be a report regarding GC performance.

### {Timing of Report}

A UE may transmit a performance report, based on information notified by an NW. For example, the UE may transmit a performance report in an uplink resource periodically/semi-persistently/aperiodically scheduled, based on RRC/MAC CE/DCI. In this case, the performance report may be included in UCI. In this case, the UE may determine periodicity/offset of the report, based on RRC/MAC CE/DCI.

The UE may determine about trigger regarding a performance report, and transmit, when the trigger is executed, a performance report. For example, when the condition(s) (for example, at least one of options 1 to 3) described in embodiment 5.2 is satisfied, the UE may transmit a performance report. In this case, the performance report may be included in a MAC CE (which can be transmitted when a PUSCH is scheduled).

When a new model is activated/registered/configured, the UE may transmit a performance report. When a timer (for example, the timer described in option 3) based on a configured/indicated parameter expires, the UE may transmit a performance report.

### {Contents of Report}

A performance report may include at least one of information indicating one or more GC performances, information indicating the performance of the model corresponding to (a list of) a scenario configuration ID(s), and the like described in embodiment 5.2.

The performance report may include information indicating a model/scenario configuration (for example, the model ID, scenario configuration ID) corresponding to GC performance for reporting. At least one of the number of pieces of information indicating GC performance included in the performance report, the number of (lists of) scenario configuration IDs included in the performance report, and the like may be determined based on K described in embodiment 5.2.

The UE may determine performance to report, based on at least one of the following:
- performance evaluated in the condition(s) (for example, at least one of options 1 to 3) described in embodiment 5.2
- performance selected based on K described in embodiment 5.2
- performance determined as a report target, based on notification from the NW

The notification may be an activation command of a model, or may be notification including information indicating a report/monitor target, for example. The UE may report the GC performance of a model to be activated/monitored.

For example, when the UE has models #1 and #2 and only model #2 of these is activated, the UE may report the performance of model #2. The UE need not report the performance of model #1.

According to the sixth embodiment described above, a UE can appropriately transmit a performance report.

### <Seventh Embodiment>

A seventh embodiment relates to an NW side model. The seventh embodiment may be related to an AI model for which inference is completely performed only on the NW side.

A UE may transmit information of a list of scenario configuration IDs in a model transfer procedure for an AI model. The information of a list may be included in model information of the AI model or may be information independent of the model information of the AI model.

In other words, the UE may transmit the information of the list of scenario configuration IDs as part of the model information or may transmit the information of the list of scenario configuration IDs as an RRC information element independent of the model information.

For example, the UE may transmit model information indicating model ID #1 and scenario configuration ID #1, transmit model information indicating model ID #1 and scenario configuration ID #2, or transmit model information indicating model ID #1 and scenario configuration IDs #1 and #2.

According to the seventh embodiment described above, a UE can appropriately transmit a scenario configuration ID(s) to an NW.

### <Supplements>

### {AI Model Information}

In the present disclosure, AI model information may mean information including at least one of the following:
- information of input/output of an AI model
- information of pre-processing/post-processing for input/output of an AI model
- information of a parameter of an AI model
- training information for an AI model
- inference information for an AI model
- performance information regarding an AI model

Here, the information of input/output of an AI model may include information regarding at least one of the following:
- contents of input/output data (for example, an RSRP, an SINR, amplitude/phase information in a channel matrix (or a precoding matrix), information regarding an angle of arrival (AoA), information regarding an angle of departure (AoD), location information)
- auxiliary information of data (which may be referred to as meta information)
- type of input/output data (for example, an immutable value, floating-point number)
- bit width of input/output data (for example, 64 bits for each input value)
- quantization interval (quantization step size) of input/output data (for example, 1 dBm for an L1-RSRP)
- possible range of input/output data (for example, [0, 1])

Note that, in the present disclosure, the information regarding AoA may include information regarding at least one of an azimuth angle of arrival and a zenith angle of arrival (ZoA). The information regarding AoD may include information regarding at least one of an azimuth angle of departure and a zenith angle departure (ZoD), for example.

In the present disclosure, the location information may be location information regarding a UE/NW. The location information may include at least one of information (for example, latitude, altitude, height) obtained by using a positioning system (for example, a satellite positioning system (the Global Navigation Satellite System (GNSS), the Global Positioning System (GPS), or the like)), information of a (or serving) BS adjacent to the UE (for example, the identifier (ID) of a BS/cell, BS-UE distance, the direction/angle of the BS (UE) seen from the UE (BS), the coordinate of the BS (UE) seen from the UE (BS) (for example, an X/Y/Z-axis coordinate), or the like), a specific address (for example, the Internet Protocol (IP) address) of the UE, and the like. The location information of the UE is not limited to information with respect to the location of the BS but may be information with respect to a specific point.

The location information may include information regarding implementation of itself (for example, the location/position/direction of an antenna, the location/position/direction of an antenna panel, the number of antennas, the number of antenna panels, and the like).

The location information may include mobility information. The mobility information may include information indicating at least one of information indicating a mobility type, the moving speed of the UE, the acceleration of the UE, the moving direction of the UE, and the like.

Here, the mobility type may correspond to at least one of fixed location UE, movable/moving UE, no mobility UE, low mobility UE, middle mobility UE, high mobility UE, cell-edge UE, not-cell-edge UE, and the like.

In the present disclosure, environment information (for data) may be information regarding environment in which data is acquired/used and may correspond to frequency information (such as a band ID), environment type information (information indicating at least one of indoor, outdoor, Urban Macro (UMa), Urban Micro (Umi), and the like), information indicating Line Of Site (LOS)/Non-Line Of Site (NLOS), or the like, for example.

Here, the LOS may mean that the UE and the BS are in environment of being able to see each other (or have no shield), and NLOS may mean that the UE and the BS are not in environment of being able to see each other (or have a shield). The information indicating LOS/NLOS may indicate a soft value (for example, the probability of LOS/NLOS) or may indicate a hard value (for example, either LOS/NLOS).

In the present disclosure, the meta information may mean information regarding input/output information suitable for an AI model, information regarding acquired/acquirable data, or the like, for example. The meta information may concretely include information regarding a beam of an RS (for example, a CSI-RS/SRS/SSB or the like) (for example, the angle each beam directs, a 3-dB beam width, the form of a directing beam, the number of beams), layout information of an antenna of the gNB/UE, frequency information, environment information, a meta information ID, and the like. Note that the meta information may be used as input/output of an AI model.

The information of pre-processing/post-processing for input/output of an AI model may include information regarding at least one of the following:
- whether to apply normalization (for example, Z-score normalization (standardization), min-max normalization)
- parameter for normalization (for example, the average/dispersion for Z-score normalization, the minimum value/maximum value for min-max normalization)
- whether to apply a specific numeric value conversion method (for example, one hot encoding, label encoding, or the like)
- selection rule for whether to be used as training data

For example, already normalized input information x_{new} obtained by performing Z-score normalization (x_{new} = (x - µ)/σ, here µ denotes the average of x, and σ denotes standard deviation) may be input to an AI model as pre-processing on input information x, and final output y may be obtained by performing post-processing on output yₒᵤₜ from the AI model.

The information of a parameter of an AI model may include information regarding at least one of the following:
- weight (for example, neuron coefficient (coupling coefficient)) information in the AI model
- structure of the AI mode
- type of the AI model as a model component (for example, Residual Network (ResNet), DenseNet, RefineNet, transformer model, CRBlock, recurrent neural network (RNN), long short-term memory (LSTM), or gated recurrent unit (GRU))
- function of the AI model as a model component (for example, a decoder or an encoder)

Note that the weight information in an AI model may include information regarding at least one of the following:
- bit width (size) of the weight information
- quantization interval of the weight information
- granularity of the weight information
- possible range of the weight information
- parameter of weight in the AI model
- information of difference from the AI model before update (if update is performed)
- method of weight initialization (for example, zero initialization, random initialization (based on normal distribution/uniform distribution/cut normal distribution), Xavier initialization (for a sigmoid function), or He initialization (for rectified linear units (ReLU)))

The structure of an AI model may include information regarding at least one of the following:
- the number of layers
- type of a layer(s) (for example, a convolutional layer, an activation layer, a dense layer, a normalization layer, a pooling layer, or an attention layer)
- layer information
- time-series specific parameter (for example, bidirectionality, time step)
- parameter for training (for example, the type of a function (L2 regularization, drop-out function, or the like), where to assign this function (for example, after which layer))

The layer information may include information regarding at least one of the following:
- the number of neurons per layer
- kernel size
- stride for the pooling layer/convolutional layer
- pooling method (MaxPooling, AveragePooling, or the like)
- information of a residual block
- the number of heads
- normalization method (batch normalization, instance normalization, layer normalization, or the like)
- activation function (sigmoid, tanh function, ReLU, information of leaky ReLU, Maxout, Softmax)

A given AI model may be included as a component of another AI model. For example, the given AI model may be an AI model for which processing advances in the order of ResNet being model component #1, a transformer model being model component #2, a dense layer, and then a normalization layer.

The training information for an AI model may include information regarding at least one of the following:
- information for optimization algorithm (for example, the type of optimization (stochastic gradient descent (SGD)), AdaGrad, Adam, or the like), and a parameter for optimization (learning rate, momentum information, or the like)
- information of a loss function (for example, information regarding loss function metrics (mean absolute error (MAE), mean square error (MSE), cross-entropy loss, NLLLoss, Kullback-Leibler (KL) divergence, or the like))
- parameter (for example, a layer or a weight) to be frozen for training
- parameter (for example, a layer or a weight) to be updated
- parameter (for example, a layer or a weight) to be an initial parameter (to be used as an initial parameter) for training
- method of training/updating an AI model (for example, the (recommended) number of epochs, a batch size, the number of data to be used for training)

The inference information for an AI model may include information regarding branch pruning of a decision tree, parameter quantization, a function of the AI model, and the like. Here, the function of the AI model may correspond to at least one of time domain beam prediction, spatial domain beam prediction, an autoencoder for CSI feedback, an autoencoder for beam management, and the like, for example.

The autoencoder for CSI feedback may be used as follows:
- A UE transmits bits to be encoded output as a result of inputting CSI/channel matrix/precoding matrix to an AI model being an encoder, as CSI feedback (CSI report)
- A BS reconfigures CSI/channel matrix/precoding matrix output as a result of inputting received bits to be encoded, to an AI model of a decoder.

In the spatial domain beam prediction, the UE/BS may input a measurement result (beam quality, for example, an RSRP) based on a non-dense (or wide) beam to an AI model and output dense (or narrow) beam quality.

In the time domain beam prediction, the UE/BS may input a time-series (past, present, and the like) measurement result (beam quality, for example, an RSRP) to an AI model and output future beam quality.

The performance information regarding an AI model may include information regarding an expected value of a loss function defined for the AI model.

The AI model information in the present disclosure may include information regarding an application range (applicable range) of the AI model. The application range may be indicated by a physical cell ID, a serving cell index, or the like. The information regarding the application range may be included in the above-described environment information.

AI model information regarding a specific AI model may be defined in a standard in advance, or the UE may be notified of the AI model information by a network (NW). An AI model defined in a standard may be referred to as a reference AI model. The AI model information regarding a reference AI model may be referred to as reference AI model information.

Note that the AI model information in the present disclosure may include an index for identifying an AI model (which may, for example, be referred to as an AI model index, an AI model ID, a model ID, and the like). The AI model information in the present disclosure may include an AI model index in addition to/instead of the information of input/output of an AI model described above and the like. Association between the AI model index and the AI model information (for example, information of input/output of an AI model) may be defined in a standard in advance, or the UE may be notified of the association from the NW.

The AI model information in the present disclosure may be associated with an AI model and may be referred to as AI model relevant information, simply as relevant information, and the like. The AI model relevant information need not explicitly include information for identifying the AI model. The AI model relevant information may be information including only meta information, for example.

In the present disclosure, the model ID and an ID corresponding to a set of AI models (model set ID) may be interchangeably interpreted. In the present disclosure, a model ID and a meta information ID may be interchangeably interpreted. The meta information (or a meta information ID) may be associated with information regarding a beam (beam configuration) as described above. For example, the meta information (or the meta information ID) may be used by the UE for selecting an AI model in consideration of which beam the BS is using, or may be used to notify which beam the BS ought to use for the UE to apply a deployed AI model. Note that, in the present disclosure, the meta information ID and an ID corresponding to a set of pieces of meta information (meta information set ID) may be interchangeably interpreted.

### {Notification of Information to UE}

Notification of any information (from an NW) to a UE (in other words, reception of any information from a BS by the UE) in the above-described embodiments may be performed by physical layer signaling (for example, DCI), higher layer signaling (for example, RRC signaling, a MAC CE), a specific signal/channel (for example, a PDCCH, a PDSCH, or a reference signal), or a combination of these.

When the notification is performed by a MAC CE, the MAC CE may be identified by means of a new logical channel ID (LCID) not defined in existing standards being included in a MAC subheader.

When the notification is performed by DCI, the notification may be performed by a specific field of the DCI, a radio network temporary identifier (RNTI) used for scrambling of cyclic redundancy check (CRC) bits assigned to the DCI, the format of the DCI, or the like.

The notification of any information to the UE in the embodiments above may be performed periodically, semi-persistently, or aperiodically.

### {Notification of Information from UE}

Notification of any information from a UE (to an NW) (in other words, transmission/reporting of any information to a BS by the UE) in the above-described embodiments may be performed by physical layer signaling (for example, UCI), higher layer signaling (for example, RRC signaling, a MAC CE), a specific signal/channel (for example, a PUCCH, a PUSCH, or a reference signal), or a combination of these.

When the notification is performed by a MAC CE, the MAC CE may be identified by means of a new LCID not defined in existing standards being included in a MAC subheader.

When the notification is performed by UCI, the notification may be transmitted by using a PUCCH or a PUSCH.

The notification of any information from the UE in the embodiments above may be performed periodically, semi-persistently, or aperiodically.

### {About Application of Each Embodiment}

At least one of the embodiments described above may be applied when a specific condition is satisfied. The specific condition may be defined in a standard, or a UE/BS may be notified of the specific condition by using higher layer signaling/physical layer signaling.

At least one of the embodiments above may be applied only to a UE that has reported a specific UE capability or that supports the specific UE capability.

The specific UE capability may indicate at least one of the following:
- supporting of specific processing/operation/control/information about at least one of the embodiments above
- supported use case(s)
- the number of AI models supported per use case
- the number of scenario configurations supported per AI model per use case

The specific UE capability may be capability applied over all the frequencies (in common irrespective of frequency), capability for each frequency (for example, one or a combination of a cell, a band, a band combination, a BWP, a component carrier, and the like), capability for each frequency range (for example, Frequency Range 1 (FR1), FR2, FR3, FR4, FR5, FR2-1, and FR2-2), capability for each subcarrier spacing (SCS), or capability for each Feature Set (FS) or Feature Set Per Component-carrier (FSPC).

The specific UE capability may be capability applied for all the duplex schemes (in common irrespective of duplex scheme) or capability for each duplex scheme (for example, time division duplex (TDD) and frequency division duplex (FDD)).

At least one of the embodiments above may be applied to a case where the UE is configured/activated/triggered with specific information related to the embodiment above (or performing the operation of the embodiment above) by higher layer signaling/physical layer signaling. For example, the specific information may be information indicating enabling of use of an AI model, any RRC parameter for a specific release (for example, Rel. 18/19), or the like.

When the UE does not support at least one of the specific UE capabilities or is not configured with the specific information, the UE may apply Rel-15/16 operation, for example.

### (Supplementary Notes)

Regarding one embodiment of the present disclosure, the following supplementary notes of the invention will be given.

### {Supplementary Note 1}

A terminal including:
a receiving section that receives a request for a data set for a specific artificial intelligence (AI) model;
a control section that collects the data set in a specific scenario configuration; and
a transmitting section that transmits information regarding the data set, the information indicating an identifier (ID) of the specific scenario configuration.

### {Supplementary Note 2}

The terminal according to supplementary note 1, wherein the control section collects the data set in the specific scenario configuration in response to reception of a data collection request signal indicating the ID of the specific scenario configuration.

### {Supplementary Note 3}

The terminal according to supplementary note 1 or 2, wherein the receiving section receives information regarding a scenario configuration in which collection of a data set is needed.

### (Supplementary Notes)

Regarding one embodiment of the present disclosure, the following supplementary notes of the invention will be given.

### {Supplementary Note 1}

A terminal including:
a receiving section that receives information regarding a scenario configuration in which collection of a data set is needed; and
a control section that trains an artificial intelligence (AI) model, based on a data set collected in a specific scenario configuration.

### {Supplementary Note 2}

The terminal according to supplementary note 1, wherein the control section trains the AI model, based on the data set, in response to reception of model training information indicating an identifier (ID) of the specific scenario configuration.

### {Supplementary Note 3}

The terminal according to supplementary note 1 or 2, wherein the control section determines the specific scenario configuration, based on a measurement result of a channel state.

### {Supplementary Note 4}

The terminal according to any one of supplementary notes 1 to 3, wherein the control section determines the specific scenario configuration, based on generalization capability of the AI model monitored.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

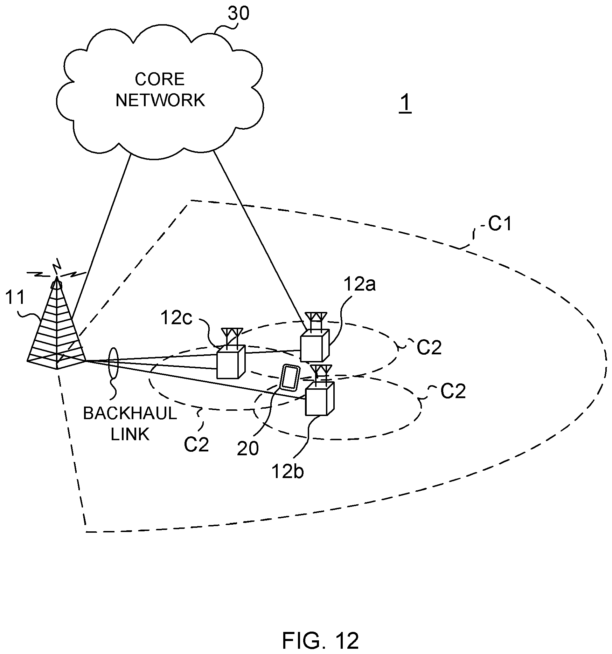

FIG. 12 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

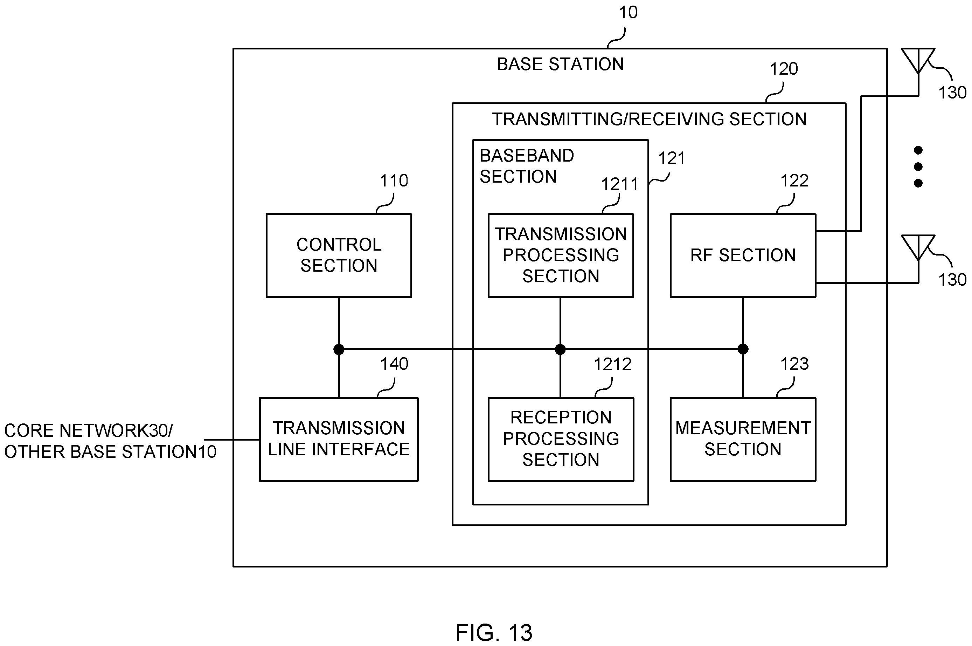

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may transmit/receive (perform backhaul signaling of) a signal with an apparatus (for example, a network node providing NFs) included in the core network 30 or other base stations 10, and so on, and may acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a request for a data set for a specific artificial intelligence (AI) model to the user terminal 20. The transmitting/receiving section 120 may receive information regarding the data set, the information indicating an identifier (ID) of a specific scenario configuration.

Note that the transmitting/receiving section 120 may transmit, to the user terminal 20, information regarding a scenario configuration in which collection of a data set is needed. The control section 110 may control transmission of model training information indicating an identifier (ID) of a specific scenario configuration, to cause an artificial intelligence (AI) model to be trained based on a data set collected in the user terminal 20 in the specific scenario configuration.

### (User Terminal)

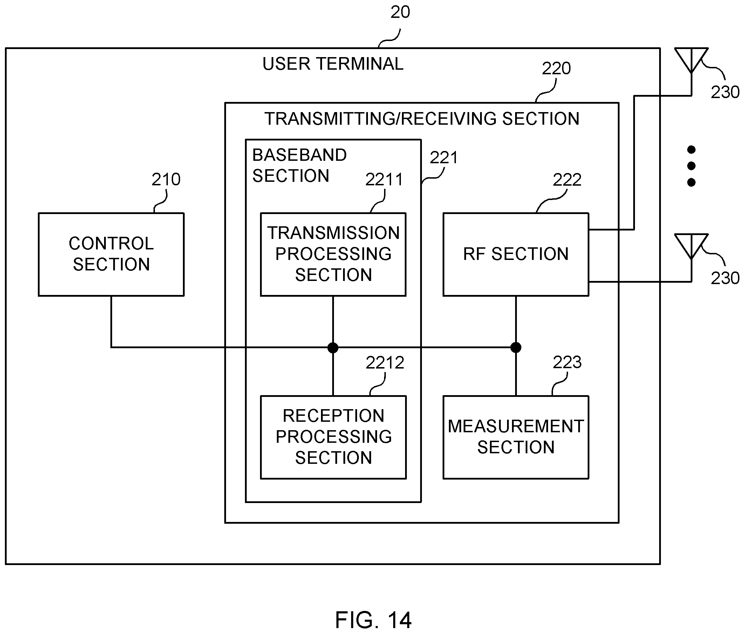

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a request for a data set for a specific artificial intelligence (AI) model. The control section 210 may collect the data set in a specific scenario configuration. The transmitting/receiving section 220 may transmit information regarding the data set, the information indicating an identifier (ID) of the specific scenario configuration.

The control section 210 may collect the data set in the specific scenario configuration in response to reception of a data collection request signal indicating the ID of the specific scenario configuration.

The transmitting/receiving section 220 may receive information regarding a scenario configuration in which collection of a data set is needed.

Note that the transmitting/receiving section 220 may receive information regarding a scenario configuration in which collection of a data set is needed. The control section 210 may train an artificial intelligence (AI) model, based on a data set collected in a specific scenario configuration.

The control section 210 may train the AI model, based on the data set, in response to reception of model training information indicating an identifier (ID) of the specific scenario configuration.

The control section 210 may determine the specific scenario configuration, based on a measurement result of a channel state.

The control section 210 may determine the specific scenario configuration, based on generalization capability of the AI model monitored.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

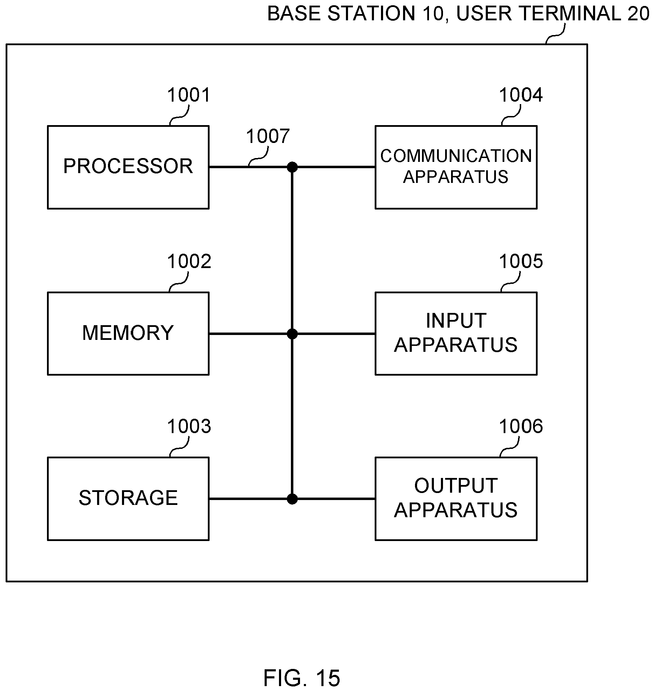

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of given information (for example, notification of "X holds") does not necessarily have to be notified explicitly, and can be notified implicitly (by, for example, not notifying this given information or notifying another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the base station transmitting information to the terminal may be interchangeably interpreted as the base station indicating, to the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

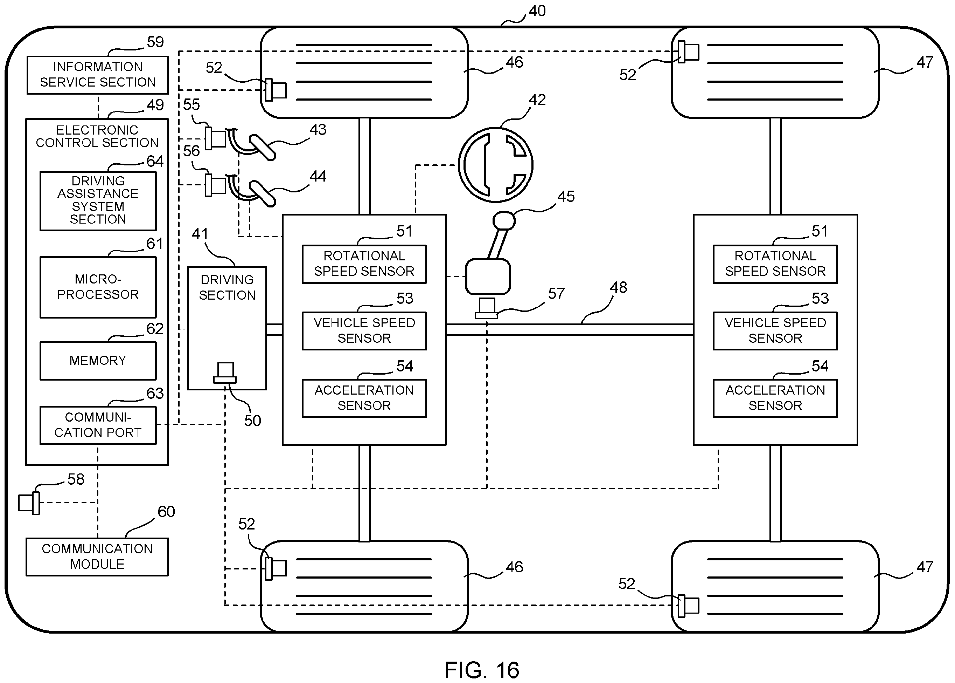

FIG. 16 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, expressions such as "good," "poor," "large," "small," "high," "low," "early," and "late" may be interchangeably interpreted (irrespective of positive degree, comparative degree, and superlative degree). In the present disclosure, expressions such as "good," "poor," "large," "small," "high," "low," "early," and "late" may be interchangeably interpreted as respective expressions obtained by adding "i-th" (irrespective of positive degree, comparative degree, and superlative degree) (for example, "highest" and "i-th highest" may be interchangeably interpreted).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a request for a data set for a specific artificial intelligence (AI) model;
a control section that collects the data set in a specific scenario configuration; and
a transmitting section that transmits information regarding the data set, the information indicating an identifier (ID) of the specific scenario configuration.

2. The terminal according to claim 1, wherein
the control section collects the data set in the specific scenario configuration in response to reception of a data collection request signal indicating the ID of the specific scenario configuration.

3. The terminal according to claim 1, wherein
the receiving section receives information regarding a scenario configuration in which collection of a data set is needed.

4. A radio communication method for a terminal, the radio communication method comprising:
receiving a request for a data set for a specific artificial intelligence (AI) model;
collecting the data set in a specific scenario configuration; and
transmitting information regarding the data set, the information indicating an identifier (ID) of the specific scenario configuration.

5. A base station comprising:
a transmitting section that transmits, to a terminal, a request for a data set for a specific artificial intelligence (AI) model; and
a receiving section that receives information regarding the data set, the information indicating an identifier (ID) of the specific scenario configuration.
